# EUROPEAN PATENT APPLICATION

(11) **EP 2 578 491 A2**
(43) Date of publication of application: **10.04.2013**
(21) Application number: 12185887.2
(22) Date of filing: 25.09.2012
(51) Int. Cl.: B64C 21/06

(54) **Boundary layer ingestion duct**

(30) Priority: 05.10.2011 GB 201117104
(71) Applicant: Rolls-Royce plc, London SW1E 6AT (GB)
(72) Inventor: Rolt, Andrew, Derby, Derbyshire DE22 2QB (GB)
(74) Representative: Hartley, Andrew Colin

(57) **Abstract**

The invention relates to a duct for a vehicle, comprising: an elongate passageway (212) defined by at least one wall (217), the passageway (212) having first and second ends relative to the longitudinal axis of the passageway (212); a non-annular inlet (216) at the first end of the passageway for receiving a first fluid flow from the boundary layer of the vehicle when in use; and, an annular outlet (226, 228) at the second end of the passageway (212) having an radially inner circumferential wall and a radially outer circumferential wall, the annular outlet (226, 228) being in fluid communication with a propulsive unit when in use, wherein the radially inner and outer circumferential walls extend continuously to the inlet (216).

## Description

### Technical Field of Invention

This invention relates to a duct. In particular, though not exclusively, the invention relates to a boundary layer ingestion duct for an aircraft.

### Background of Invention

Conventional state of the art propulsion systems for large civil aircraft typically include one or more gas turbine engines placed under the wings of the aircraft. However, some studies have indicated that so-called distributed propulsion, which involves having numerous smaller propulsion units preferentially arranged around an aircraft, may provide some significant benefits in terms of noise reduction and fuel efficiency when compared with the current state of the art propulsive arrangements.

One known option for distributed propulsion is to provide numerous propulsive units which are located so as to capture and accelerate slow speed boundary layer air which has formed against the surface of the aircraft. This can lead to a significant reduction in overall fuel burn with the maximum benefit of boundary layer ingestion being achieved when the low speed flow is not mixed with the freestream flow, but is accelerated to homogeneous conditions by the propulsion system.

When implementing boundary layer ingestion, the inlet of the fan intake duct is located flush to a surface of the aircraft so that the low speed boundary layer that has developed can be captured and energized by the propulsion system.

Conventional designs of fan intake duct include a passage from an air intake zone to the face of a fan. These conventional designs tend to have two flow streams within them, a high speed (or freestreaming) flow along the length of the duct and a very low speed flow proximate to the wall. This leads to non-uniform radial and circumferential velocity profiles and a resulting loss of performance and aeromechanical instabilities (one per revolution forcing on the fan blades).

US2008164378A describes a system which uses small jets of air aimed at a relative angle to the main flow direction to enhance the mixing of the boundary layer flow with the freestream flow. However, this is considered inefficient.

The present invention seeks to provide an improved duct for boundary layer ingestion.

### Statements of Invention

In a first aspect, the present invention provides a duct for a vehicle, comprising: an elongate passageway defined by at least one wall, the passageway having first and second ends relative to the longitudinal axis of the passageway; a non-annular inlet at the first end of the passageway for receiving a first fluid flow from the boundary layer of the vehicle when in use; and, an annular outlet at the second end of the passageway having an radially inner circumferential wall and a radially outer circumferential wall, the annular outlet being in fluid communication with a propulsive unit when in use, wherein the radially inner and outer circumferential walls extend continuously to the inlet.

Providing a non-annular inlet and an annular outlet which is connected by continuous walls allows a passageway to be defined in which the fluid flow is redistributed as it progresses along the passageway from the inlet to the outlet. This results in a substantially circumferentially homogenous flow of air entering the propulsive unit which helps to overcome the aforementioned problems with non-homogeneous circumferential fluid flow. In other words, the invention allows the low velocity boundary fluid flow ingested from the surface of the vehicle to become substantially axi-symmetric for ingestion by a circular propulsive unit.

The term vehicle will be understood to cover aircraft and marine vehicles. For example, the propulsive unit may be a water jet for marine propulsion. Hence the term fluid may include a liquid such as water, or a gas such as air.

The passageway may extend from the non-annular inlet and may wrap around an imaginary inner core section so as to provide the annular outlet.

The non-annular inlet may include a first edge portion and a second edge portion. The first edge portion may extend into the duct to provide a first wall portion and a second wall portion which form the radially inner and outer circumferential walls at the annular outlet.

The inlet may be rectangular.

The duct may include a first location along the length of the passageway between the inlet and outlet at which the cross section of the passageway is curved.

The annular outlet may define a radially inner cavity in which the hub of the fan is located when in use.

A third wall portion and a fourth wall portion of the passageway extend between the inlet and outlet and abut one another to form a radially extending joining wall at the annular outlet.

In a second aspect, the present invention provides an aircraft, comprising: the duct according to the first aspect, wherein the inlet is positioned to capture a boundary layer air flow; and, a propulsive unit in fluid communication with the inlet via the duct.

The propulsive unit may be a fan. A hub of the fan may be located within the radially inner cavity defined by the duct.

### Description of Drawings

Figures 1a and 1b show a known boundary layer ingestion duct.
Figures 2a and 2b show a boundary layer ingestion duct according to the invention.

### Detailed Description of Invention

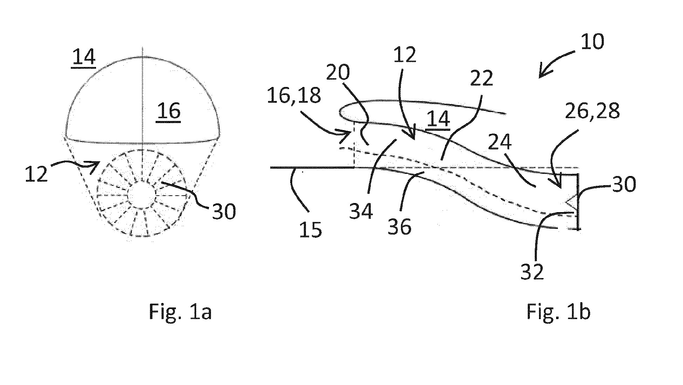

Figure 1 shows a prior art duct which is used for boundary layer ingestion duct 10 for an aircraft. The duct 10 includes an elongate passageway 12 having a longitudinal axis and is defined by an approximate semi circular cross-section which is defined by a nacelle 14 and the body of the aircraft 15. The passageway 12 follows a sinuous path extending from an inlet 16 at the first end 18, through a first horizontal section 20 (as shown in the figures), a vertically descending shallow dog leg 22 and a second horizontal section 24 to immerge at an outlet 26 at the second end 28 of the passageway 12. A fan 30 is located at the second end 28 of the passageway 12 in fluid communication with the outlet of the passageway 12.

The inlet 16 is positioned on the aircraft 15 so as to capture low speed boundary layer air which has formed on the surface of the aircraft 15 which passes along the passageway 12 and flows into the fan 30 via the fan face 32. Typically, the inlet 16 will be positioned where the boundary layer air is at its thickest on the aircraft, which, for a conventional tube and wing design, is towards the rear part of the wing or towards the rear of the airframe fuselage. The fan 30 provides a propulsive force for the aircraft 15 by accelerating the low speed boundary layer air received at the inlet up to the freestream flow velocity which passes the aircraft 15.

It will be appreciated, that the shape of the duct 10 and inlet 16 and the relative positions of the fan 30 to the inlet 16 as shown in Figure 1, is not fixed and may be varied. Further, the fan outlet, which is not shown, will be preferentially positioned on the aircraft 15 for reintroducing the accelerated flow to the freestream flow around the aircraft 15 but this may be varied.

Due to the nature of the duct 10 and the air flow received at the inlet 16 from the boundary layer, there are two streams of air flow within the passageway: a high velocity stream 34 and a low velocity stream 36.

The high velocity 34 and low velocity 36 streams are not defined by a discrete boundary and will mix to a certain extent along the length of the passageway 12. But typically, a low speed boundary layer will be extend up to approximately 50% of the width of the duct and have an average speed of approximately 80% of the high velocity flow.

The velocity difference between these two streams creates a circumferential pressure difference seen at the fan face 32 and asymmetric loading of the fan 30. This can lead to inefficiencies and increased fuel burn, excessive noise and vibration, and premature wear on the propulsive system.

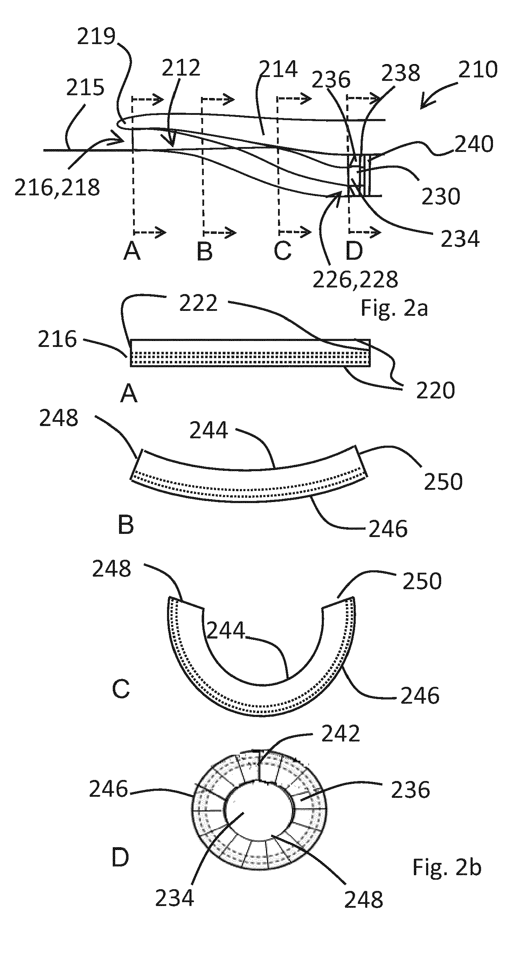

Figure 2a shows a cross section of a boundary layer ingestion duct 210 according to the present invention. This duct 210 is similar to the prior art example described with reference to Figure 1 in that it includes an elongate passageway 212 with a longitudinal axis and which is defined by at least one wall 217, which is defined by the nacelle 214 and a surface of the aircraft 215 and which also runs continuously from an inlet 216 at a first end of the passageway 212 to an outlet 226, 228 at a second end of the passageway 212. The outlet 226 is in fluid communication with a fan 230 which accelerates the air flow from the duct to provide the aircraft with a propulsive force. The outlet of the fan 230 and remainder of the aircraft are not shown for clarity.

Figure 2b shows cross-sections of the passageway at points A, B, C, D, as referenced in Figure 2a.

With reference to point A, the inlet 216 is typically in the form of a rectangular aperture through which air enters the passageway 212. However, the skilled person will appreciate that the inlet could be an alternative shape. For example, the rectangle could have rounded corners or could be optimised so as to account for non-uniform boundary layer air flow entering through the inlet. In this case, the inlet is likely to be non axi-symmetric. This may occur, for example, if the inlet is placed to capture air from the junction between a wing and a fuselage. The shape of the upper periphery 219 of the inlet is substantially curved or quasi-elliptical in cross section in order to prevent boundary layer separation.

The outlet 226, at point D, is annular in shape and is dimensioned to match the annular inlet 232 of the fan 230. The fan includes in radial series: a rotatable hub 234; an annular array of blades 236 which are mounted to and extend radially away from, the hub; and a housing. The rotatable is hub 234 is suspended within the fan housing 238 by a plurality of struts 240. The space between hub 234 and housing 238 in which the blades 236 are located provides a path which is fully annular in cross section and through which air passes from the duct 210 so as to be energised by the rotation of the blades 236 when in use.

In order to provide the annular outlet 226 to the duct 210, the cross-sectional shape of the passageway 212 varies along its length so as to be transformed from a non-annular shape, in this case rectangular, to an annular one.

In doing so, the passageway 212 extends away from the inlet 216 at point A towards the outlet with an initial cross-section which is substantially the same as the shape of the inlet 216. The wall 217 extends continuously between the inlet 216 and the outlet 226 with a continuously varying cross-sectional profile along its length. The variation is such that the cross-sectional profile of the passageway 212 is effectively elongated and wrapped around to provide an annulus which defines a central portion with no airflow in which the fan hub 234 resides. Thus, instead of the duct 210 providing air to the entire face of the fan 230, it is only provided to a fluid pathway which exists between an outer housing 238 and the hub 234 and in which the blades 246 reside.

Specifically, at point A there is shown a rectangular inlet 216 formed by two major edges 220 and two minor edges 222 which represent the long and short sides of the rectangular inlet 216. The edges 220, 222 extend into the passageway 212 to provide first 244, second 246, third 248 and fourth 250 walls, with the first 244 and second 246 walls corresponding to the major edges 220, and the third 248 and fourth 250 walls corresponding to the minor edges 222 of the inlet 216.

At point B, there is shown a substantially flattened U-shaped cross-section in which the cross-sectional profile of the passageway 212 has been elongated such that the distance between the third 248 and fourth 250 wall portions is increased but the length of the third 248 and fourth 250 wall portions may be reduced. That is, the first 244 and particularly second 246 wall portions are greater in length but may be closer together. Further, the first 244 and second 246 portions are curved and approximately equidistantly separated such that it appears as though the passageway 212 has been bent around on itself.

At point C there is shown a more circular U-shaped cross-section. Here, the passageway 212 wall portions have continued to elongate and wrap around from point B such that the third 248 and fourth 250 portions of the walls are closer together and the radius of curvature which defines the first 244 and second 246 wall portions is smaller so as to give the cross section a more curved profile.

Point D denotes the outlet 226 of the duct 210. Here the passageway 212 has fully wrapped around on itself to provide an annulus which matches the inlet of the fan 230. The first 244 and second 246 wall portions have concentric circular profiles and the third 248 and fourth 250 portions abut one another so as to define the joining wall 242 which then terminates.

The advantage of the duct 210 is that the circular warping or wrapping of the passageway 212 as it extends from a non-annular inlet 216 to an annular outlet 226 with continuous walls leads to a rearrangement of the internal airflow. Thus, the airflow which is presented to the fan 230 in use is substantially circumferentially homogenous which helps reduce the aforementioned problems attributed to non-homogenous airflow. The resulting radial variation in velocity and pressure profiles is axi-symmetric and can be accommodated by a spanwise variation in the stagger and camber angles of rotor blades 236.

Although the air flow is substantially circumferentially homogeneous, there is a low velocity portion adjacent to the joining wall 242 at the outlet 226. In one embodiment, termination of the joining wall can be located upstream of the outlet 226 such that the airstreams coming off the third 248 and fourth 250 wall portions and forming a wake have time to mix with the main flow before entering the fan 230. Alternatively the low velocity air flows adjacent to the joining wall may be bled off upstream of the outlet 226 in order to minimise the wake.

The duct 210 can be made from any suitable material which has the mechanical properties to provide the structure described above. Typically, the material will be aluminium alloy or some form of composite such as a carbon fibre reinforced plastic and honeycomb cored sandwich structure. Support for the duct 210 can be provided by the nacelle 214 of the propulsive unit and through the joining wall 242 where the third 248 and fourth 250 wall portions abut. Other structural members may be included within the duct 210 or on its exterior as required.

Although the above described embodiments relate to a rectangular inlet 216, other non-annular shaped inlets are envisaged to be within the scope of the invention which is defined by the claims. For example, the inlet 216 may be partially rounded or non-symmetrical; it may be regular or irregular. The inlet 216 of the passageway 212 may be downstream of the inlet to the nacelle 214 or there may be multiple inlets which branch from a single main inlet which is used to capture air for a plurality of propulsive units.

The above embodiments are provided as examples of the invention defined by the claims and should not be considered limiting. For example, although the above embodiments relate to an aircraft having a propulsive unit in the form of a fan, the duct could be for use on a marine vessel having a propulsive unit in the form of an impeller.

Further, although the invention is described as providing a circumferentially homogeneous flow for ingestion by the propulsive unit, it will be understood that the flow may not be entirely homogenous. For example, the radial thickness of the low velocity boundary layer air within the duct may be non-uniform. There may be a variance in the thickness of approximately +/-25% from the mean thickness of the boundary layer air.

Although the above embodiments concentrate mainly on the thick boundary layer air within the duct, it will be appreciated that other dimensions may be configured so as to help reduce the formation of other boundary layer flows within the duct.

## Claims

1. A duct for a vehicle, comprising:
an elongate passageway defined by at least one wall, the passageway having first and second ends relative to the longitudinal axis of the passageway;
a non-annular inlet at the first end of the passageway for receiving a first fluid flow from the boundary layer of the vehicle so as to have high velocity and low velocity streams when in use; and,
an annular outlet at the second end of the passageway having an radially inner circumferential wall and a radially outer circumferential wall, the annular outlet being in fluid communication with a propulsive unit when in use,
wherein the radially inner and outer circumferential walls extend continuously to the inlet.

2. A duct for a vehicle as claimed in claim 1 wherein the non-annular inlet includes a first edge portion and a second edge portion, wherein the first and second edge portions extend into the passageway to provide respective first wall portion and a second wall portion which form the radially inner and outer circumferential walls at the annular outlet.

3. A duct for a vehicle as claimed in claims 1 or 2 wherein the inlet is rectangular.

4. A duct for a vehicle as claimed in any preceding claim wherein at a first location along the length of the passageway between the inlet and outlet, the cross section of the passageway is curved.

5. A duct for a vehicle as claimed in any preceding claim wherein the annular outlet defines a radially inner cavity which abuts a hub of the propulsive unit.

6. A duct for a vehicle as claimed in any preceding claim wherein a third wall portion and a fourth wall portion of the passageway extend between the inlet and outlet and abut one another to form a radially extending joining wall at the annular outlet.

7. A vehicle, comprising:
the duct as claimed in claims 1 to 6, wherein the inlet is positioned to capture a boundary layer fluid flow; and,
a propulsive unit in fluid communication with the inlet via the duct.

8. A vehicle as claimed in claim 7, wherein the propulsive unit is a fan.

9. A vehicle as claimed in claim 8, wherein a hub of the fan is located within the radially inner cavity defined by the duct.
